(19) **Europäisches Patentamt**
**European Patent Office**
**Office européen des brevets**

(11) **EP 2 030 054 B1**

(12) **FASCICULE DE BREVET EUROPEEN**

(45) Date de publication et mention
de la délivrance du brevet:
**14.11.2018 Bulletin 2018/46**

(21) Numéro de dépôt: **07789001.0**

(22) Date de dépôt: **14.06.2007**

(51) Int Cl.:
**G02B 27/42** *(2006.01)*    **G02B 27/00** *(2006.01)*
**G02B 5/18** *(2006.01)*    **G02B 27/01** *(2006.01)*

(86) Numéro de dépôt international:
**PCT/FR2007/051435**

(87) Numéro de publication internationale:
**WO 2007/148002 (27.12.2007 Gazette 2007/52)**

(54) **CONDUIT OPTIQUE DESTINE A LA REALISATION D'UN AGENCEMENT D'AFFICHAGE ELECTRONIQUE**

OPTISCHE LEITUNG FÜR ELEKTRONISCHES DISPLAY

OPTICAL PIPE INTENDED FOR PRODUCING AN ELECTRONIC DISPLAY ARRANGEMENT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.06.2006 FR 0652567**

(43) Date de publication de la demande:
**04.03.2009 Bulletin 2009/10**

(73) Titulaire: **Essilor International**
**94220 Charenton-le-Pont (FR)**

(72) Inventeurs:
• **BUCHON, Cédric**
**94220 Charenton-le-Pont (FR)**
• **MOLITON, Maxime**
**75015 Paris (FR)**

(74) Mandataire: **Lenne, Laurence et al**
**Ipsilon**
**Le Centralis**
**63, avenue du Général Leclerc**
**92340 Bourg-la-Reine (FR)**

(56) Documents cités:
**WO-A-93/20464**          **WO-A-99/15919**
**FR-A- 2 868 551**          **US-A- 5 260 828**
**US-A1- 2002 196 428**

• JAROSZEWICZ Z ET AL: "Determination of phase-step errors of kinoform gratings from their diffraction efficiencies" OPTICAL ENGINEERING, SOC. OF PHOTO-OPTICAL INSTRUMENTATION ENGINEERS. BELLINGHAM, US, vol. 40, no. 5, 1 mai 2001 (2001-05-01), pages 692-697, XP002376157 ISSN: 0091-3286

**Description**

L'invention concerne un conduit optique destiné à la réalisation d'un agencement d'affichage électronique.

Il est décrit dans le document de brevet FR 2 868 551 un conduit optique destiné à la réalisation d'un agencement d'affichage électronique monté sur une monture de type paire de lunettes. Le document US 2002/0196428 divulgue une méthode de calcul de l'efficacité de diffraction d'un composant optique diffractif en fonction d'un défaut d'un outil de gravure.

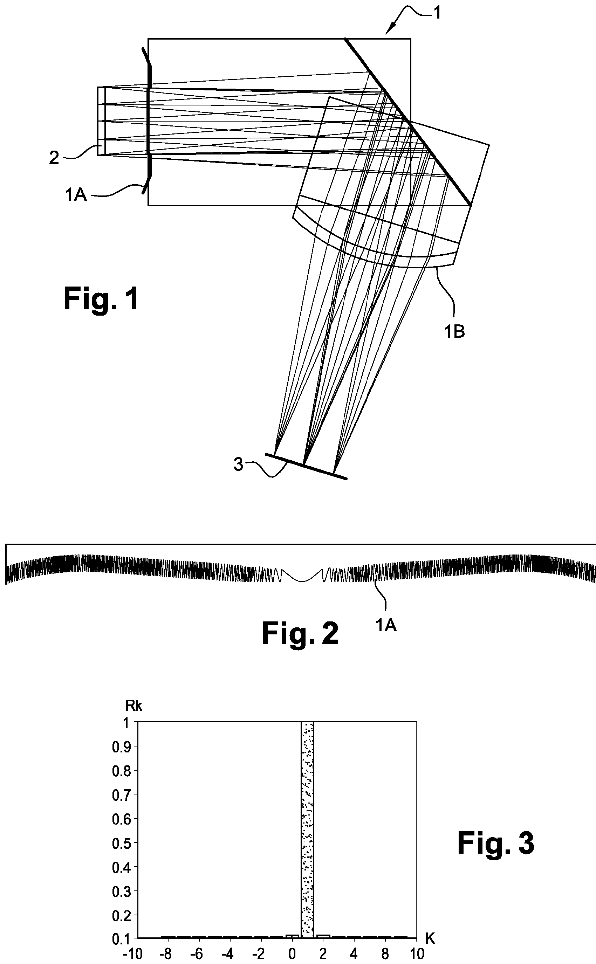

Un tel conduit 1 illustré sur la figure 1 est destiné à transmettre des signaux de lumière émis par un écran miniature 2 d'une de ses extrémités dite surface d'entrée 1A à son autre extrémité dite surface de sortie 1B vers l'oeil 3 d'un utilisateur pour la vision d'une image virtuelle. Il comporte un composant diffractif conformé directement sur la surface d'entrée 1A, ce composant diffractif étant un élément répondant à l'équation d'un composant asphérique de révolution représenté sur la figure 2.

Cette surface asphéro-diffractive, de type « kinoform », a pour fonction de minimiser l'astigmatisme et la courbure de champ, ainsi que le chromatisme.

Cependant, l'utilisation d'un kinoform sur la surface d'entrée a l'inconvénient de générer des images parasites.

La visibilité des images parasites est liée à la quantité de lumière diffractée dans les ordres de diffraction autres que l'ordre de conception (communément l'ordre 1). Plus spécifiquement, ces images parasites se présentent comme une démultiplication de l'image principale, chaque ordre de diffraction donnant lieu à sa propre image parasite. Comme la puissance du composant diffractif est relativement faible et du fait de la configuration optique du système, ces images parasites apparaissent quasiment focalisées pour l'utilisateur et légèrement décalées par rapport à l'image principale, ce qui est très gênant.

Comme la visibilité des images parasites est liée à la quantité de lumière diffractée dans les différents ordres de diffraction du kinoform gravé sur la porteuse de la surface et que la théorie de la diffraction indique que la proportion de lumière diffractée dans l'ordre 1 par rapport à la quantité de lumière incidente, ou rendement de diffraction dans l'ordre 1, n'est jamais égale à 100%, tout système de conduit diffractif tel que décrit dans le document de brevet FR 2 868 551 présente des images parasites dues à la diffraction dans les ordres supérieurs du kinoform de la surface.

Ce n'est pas en soi forcément un problème pour l'utilisateur, tout dépend en fait des seuils de luminance auxquels se situent ces images parasites par rapport à l'image principale. On peut ainsi définir les rapports entre l'intensité des différents ordres de diffraction et l'ordre de conception (généralement l'ordre 1).

Ces rapports peuvent être définis pour le cas d'une source ponctuelle comme le ratio $R_k$ entre la valeur pic de l'intensité de l'image ponctuelle de l'ordre de diffraction considéré k, et la valeur pic de l'intensité de l'image ponctuelle de l'ordre de diffraction de conception (l'ordre 1 généralement).

Les théories optiques de formation des images connues de l'homme du métier montrent que la répartition d'éclairement dans le plan de l'image s'écrit dans l'approximation scalaire comme la convolution d'une fonction peigne de dirac pondéré des rendements des ordres de diffraction, par la valeur de l'intensité lumineuse du système à l'ouverture considérée :

$$I(r) = [\Sigma_{k=-\infty}^{k=+\infty} \delta(r+k.r_0).\eta_k]*[PSF(r)]$$

où PSF(r) représente la valeur de l'intensité lumineuse dans le plan de l'image en fonction de la position r dans ce plan,
où $r_0$ est un vecteur donné dans le plan de l'image dont les coordonnées sont calculables à partir de la géométrie du réseau ou du kinoform,
où $\eta_k$ représente le rendement de diffraction dans l'ordre k, c'est-à-dire le ratio entre la quantité d'énergie lumineuse dirigée dans l'ordre k par le réseau ou le kinoform divisée par la quantité totale d'énergie lumineuse incidente sur le réseau.

Par ailleurs, on peut considérer que l'approximation scalaire est valide.

Les théories optiques de formation des images dans l'approximation scalaire indiquent alors que ces ratios déterminent les rapports de brillance entre les images parasites et l'image principale.

On obtient ainsi : $R_k = \eta_k / \eta_{kd}$.

En pratique, on peut déterminer que le seuil critique de visibilité d'une image parasite telle que celle issue d'un ordre de diffraction supérieur est de l'ordre de 1/20. Idéalement, il sera inférieur à cette valeur, et on constate qu' au-delà d'un rapport de 1/50 environ, les images parasites sont à peine visibles par l'oeil et constituent une gêne négligeable aux valeurs d'éclairement de l'image utilisées, c'est-à-dire des valeurs au moins supérieures à 50 Cd/m$^2$, typiquement 100 à 200 Cd/m$^2$.

Lorsqu'on fait le calcul théorique des coefficients $R_k$, à l'aide des théories optiques de la diffraction connues de l'homme du métier, et des données de conception du composant asphéro-diffractif, on constate que ces coefficients sont inférieurs à ces valeurs pour le cas le plus défavorable, c'est-à-dire pour un conduit tel que précédemment précisé, dans le cas d'un point image en bord de champ.

Ces valeurs de coefficients $R_k$ sont illustrées sur la figure 3 et précisées dans le tableau ci-après qui précise les rapports de luminance entre l'image principale, à savoir l'ordre 1, et les ordres de diffraction supérieurs pour un conduit diffractif tel que précisé, en considérant une surface d'entrée de conception idéale exempte de défauts de fabrication.

| Ordre de diffraction k | $R_k$ | $1/R_k$ : ratio d'intensité |
|---|---|---|
| -8 | 6.3975e-004 | 1563 |
| -7 | 4.7951e-004 | 2086 |
| -6 | 3.4965e-004 | 2860 |
| -5 | 2.9380e-004 | 3404 |
| -4 | 3.2059e-004 | 3119 |
| -3 | 4.4710e-004 | 2237 |
| -2 | 7.6548e-004 | 1306 |
| -1 | 1.7137e-003 | 584 |
| 0 | 7.0260e-003 | 142 |
| 1 | 1 | 1 |
| 2 | 8.0882e-003 | 124 |
| 3 | 2.1894e-003 | 457 |
| 4 | 1.4509e-003 | 689 |
| 5 | 1.5661e-003 | 639 |
| 6 | 1.9870e-003 | 503 |
| 7 | 2.3502e-003 | 425 |
| 8 | 2.1692e-003 | 461 |

On peut donc déduire que le problème des images parasites est en fait un problème de fabrication de la surface diffractive. Il est à noter que si le conduit diffractif est une pièce réalisée en injection, la surface gravée est une empreinte située dans le moule et qui transfère sa forme au conduit.

Ces défauts de fabrication sont inhérents à la technologie utilisée pour graver la surface diffractive sur l'empreinte du moule. Un examen du profil gravé en comparaison avec le profil théorique calculé théoriquement permet de mettre en évidence le défaut.

Par ailleurs, quand les conditions d'injection sont bonnes, des mesures de comparaison entre la surface diffractive moulée sur la pièce injectée et l'empreinte diffractive du moule montrent une corrélation directe entre les deux qui indique que le transfert de forme est bien réalisé. Les défauts de gravure sur l'empreinte se transfèrent directement sur la pièce moulée.

A l'aide du profil mesuré et d'hypothèses sur la méthode de gravure, il est possible de calculer l'efficacité de diffraction et les coefficients $R_k$ de rapport entre l'intensité dans l'image parasite d'ordre k et l'intensité dans l'image principale. Ce calcul peut être réalisé par l'homme de l'art à l'aide des théories optiques de la diffraction.

Une façon commune de quantifier le défaut de gravure est de parler de « Largeur de Zone Perdue » ou LZP. C'est la zone où le profil diffractif gravé ne correspond pas au profil théorique. Typiquement, avec les technologies de gravure actuelles, cette zone est de faible dimension par rapport à la largeur de zone totale. On peut l'estimer comprise entre 2 et 7 $\mu$m. Plus cette LZP est grande, plus il y aura d'énergie dissipée dans les ordres supérieurs.

Un calcul rapide permet de montrer que le rapport d'efficacité de diffraction dans l'ordre 1 (qui est ici l'ordre de conception) entre le composant idéal et le composant avec LZP est égal à :

$$R = ((L-LZP)/L)^2$$

avec L la largeur de zone diffractive, et LZP la largeur de la zone perdue.

Ce calcul simple donne un ordre de grandeur de l'énergie dissipée dans les ordres supérieurs et dans l'orde zéro (c'est-à-dire toute celle qui n'est pas canalisée dans l'ordre 1), mais n'est pas suffisamment précis pour décrire la visibilité des images parasites par rapport à l'image principale. Celle-ci est décrite par la connaissance de l'ensemble des coefficients $R_k$ qui nécessite un calcul complet de la figure de diffraction du profil gravé réel. Néanmoins il permet de fournir une première façon de spécifier de façon simple les propriétés du composant diffractif à graver.

Cependant cette méthode manque de précison et l'invention propose une méthode optimisée, plus précise prenant en compte de façon complète le calcul de la figure de diffraction du profil gravé pour spécifier le composant diffractif.

Cette méthode conforme à l'invention permet de spécifier la puissance de la partie diffractive gravée sur la surface qui donne un optimum de performances générales du conduit et une minimalisation de la visibilité des images parasites.

Pour ce faire, l'invention propose une méthode telle que définie dans la revendication 1. Des modes de réalisation additionnels sont définis dans les revendications dépendantes.

L'invention est décrite ci-après à l'aide de figures n'illustrant qu'un mode de réalisation de l'invention.

La figure 1 est une vue de dessus d'un conduit optique destiné à la réalisation d'un agencement d'affichage électronique.

La figure 2 est une vue en coupe radiale d'un élément diffractif porté par la surface d'entrée de ce conduit.

La figure 3 est un histogramme illustrant le rapport de brillance entre les images parasites et l'image principale $R_k$ en fonction de l'ordre de diffraction k des images parasites, dans un tel conduit optique exempt de défauts de fabrication sur sa surface diffractive, selon l'art antérieur.

La figure 4 est un graphe représentant la variation de chromatisme transverse pour un point image en bord de champ en fonction de la puissance diffractive gravée sur la face d'entrée.

La figure 5 illustre la comparaison d'un profil théorique et d'un profil réel du composant diffractif gravé sur la surface d'entrée du conduit optique.

La figure 6 est un histogramme illustrant le rapport de brillance entre les images parasites et l'image principale $R_k$ en fonction de l'ordre de diffraction k des images parasites, dans un tel conduit optique conforme à l'art antérieur et présentant un défaut de fabrication conforme à celui représenté sur la figure 5, selon une simulation conforme à l'invention.

La figure 7 est un graphe résultant de la mesure de la luminance des images parasites dues aux ordres de diffraction supérieurs pour un point image en bord de champ au moyen d'un photo-colorimètre imageur.

La figure 8 est un graphe représentant la valeur des rapports de luminance $1/R_k$ des images parasites des ordres de diffraction de -5 à +5 en fonction de la puissance diffractive (ordre de conception = ordre 1) pour un composant ayant une hauteur de saut de 1100 nm.

La figure 9 est un graphe représentant la valeur des rapports de luminance $1/R_k$ des images parasites des ordres de diffraction de -5 à +5 en fonction de la puissance diffractive (ordre de conception = ordre 1) pour un composant ayant une hauteur de saut de 1050 nm.

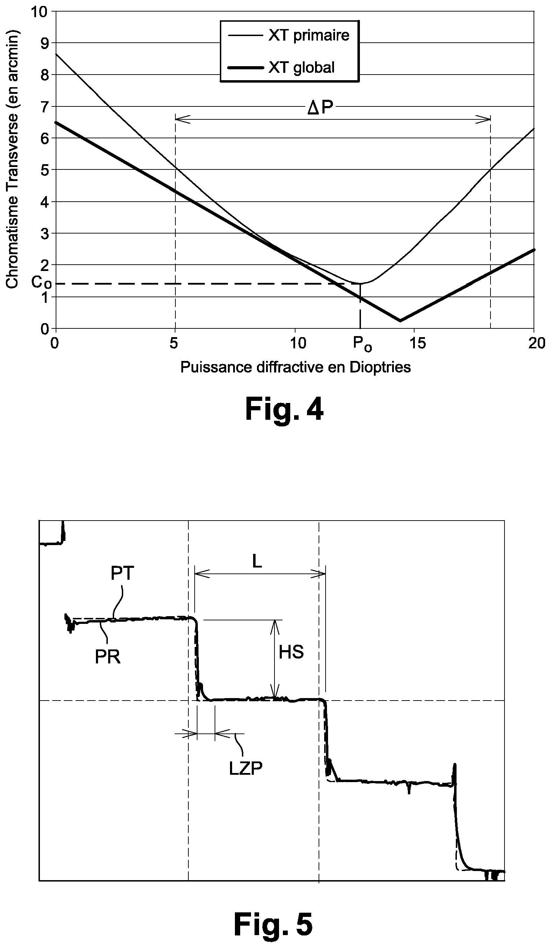

Du point de vue de la qualité optique, la puissance diffractive apportée par la gravure d'un kinoform sur la surface d'entrée du conduit sert à compenser dans une plus ou moins large mesure le chromatisme transverse de la combinaison optique du conduit. La figure 4 est un graphe représentant la variation de chromatisme transverse en bord de champ en fonction de la puissance diffractive gravée ou moulée sur la face d'entrée.

Le chromatisme transverse primaire est calculé comme la distance entre l'impact du rayon principal dans les longueurs d'ondes bleues et rouges du spectre visible, alors que le chromatisme global est calculé comme étant le segment le plus long entre l'impact des rayons principaux de deux longueurs d'onde quelconques et distinctes du spectre considéré pour le calcul. Dans le cas d'une optique achromatisée, à cause des phénomènes de repli de la tache image, il convient de ne considérer que le chromatisme transverse global.

Alternativement à l'impact du rayon principal pour une longueur d'onde, on peut considérer dans le calcul du chromatisme transverse, le centroïde de la fonction d'étalement du point à la longueur d'onde considérée ou le centre du disque contenant un certain pourcentage de l'énergie encerclée (de préférence au moins 50%).

Le conduit étant destiné à des applications de visualisation sous forme d'image virtuelle, le chromatisme transverse est exprimé sous forme d'angle sous lequel est perçu le segment ci-dessus spécifié

Grâce au graphe de la figure 4, il apparaît qu'il existe un optimum de performances optiques pour le conduit, lorsque la puissance optique diffractive vaut $P_o$ égale à environ 13 Dioptries, pour un chromatisme transverse global résiduel valant $C_o$ égal à environ 1.4 arcmin. Il existe une plage de puissance $\Delta P$ pour le kinoform gravé sur la surface d'entrée dans laquelle le chromatisme transverse global est maintenu à des seuils acceptables pour l'oeil humain.

Nous appelons $P_{OPTXT}$, la valeur de puissance diffractive gravée sur la face d'entrée tel que le chromatisme transverse global résiduel est minimisé. Dans le cas représenté, nous avons $P_{OPTXT} = 13.00$ D.

Considérons que le seuil d'acceptabilité du chromatisme transverse pour l'oeil est de 5 arcmin au maximum. Au-delà, le chromatisme dégrade trop fortement l'image pour que celle-ci présente une qualité satisfaisante. On peut ainsi définir une zone de puissance diffractive optimale pour le chromatisme (ZPDOC) qui sera obtenue en traçant la courbe d'évolution du chromatisme transverse global (XTG) en fonction de la puissance diffractive (PD) de la surface d'entrée : XTG = f(PD) et en cherchant l'ensemble de points d'abscisse PD de cette courbe situés en dessous de la courbe XTG = 5 arcmin.

Dans le cas représenté, cela donne comme le montre la figure 4 une zone de puissance diffractive ΔP comprise entre environ 4.95 D et 18.40 D.

On peut ainsi définir un domaine de puissance optique allouée à la face d'entrée tel que le chromatisme transverse global résiduel soit inférieur à une certaine valeur X en arcmin. Il est appelé $D_{XT}(X)$.

Nous avons donc : $D_{XT}(5) = [4.95D ; 18.40D]$.

En pratique, il est choisi de préférence des valeurs de chromatisme inférieures à 5 arcmin.

Il a été vu plus haut que le défaut de gravure dû au tour de précision nanométrique et à l'outil diamant utilisés pour réaliser la surface diffractive ou à son empreinte dans le moule, est la cause de la visibilité anormalement élevée des images des ordres de diffraction parasites.

Des observations de cette surface permettent de le quantifier précisément sur le profil gravé comme le montre la figure 5 où sont réprésentés le profil réel PR et le profil théorique PT. Ce défaut se retrouve souvent au voisinage du saut entre une zone et sa voisine. Par ailleurs nous savons que les phénomènes qui causent ce défaut sont d'origine mécanique : ils sont causés par le fait que la mécanique du tour et le rayon d'outil de la pointe diamant, par leur nature non ponctuelle, ne peuvent pas générer exactement la discontinuité dans la courbe théorique du profil que constitue la marche entre une zone et sa voisine.

En théorie comme en pratique, le défaut généré dépend uniquement du profil de la marche ou hauteur de saut HS, de l'outil diamant et du tour de précision utilisés pour la gravure, en considérant pour ce dernier son réglage mécanique ; il ne dépend pas de la largeur de la zone diffractive L. Des mesures ont permis de vérifier ce constat théorique sur une variété de profils diffractifs présentant des largeurs de zones diverses de plusieurs centaines à quelques micromètres.

Il est donc possible de conclure que finalement, puisque le défaut généré est constant et ne dépend que de l'outillage et de la hauteur de marche, si on connaît précisément ce défaut, il est possible de contrôler la quantité de lumière présente dans les ordres parasites en choisissant une puissance diffractive sur la surface d'entrée adaptée.

En effet, dans le cas du conduit diffractif considéré, le kinoform gravé sur la surface d'entrée a une fonction de phase à symétrie de révolution. La largeur minimale des zones diffractives sur l'ensemble du composant est donc connue dès lors que le diamètre sur lequel on grave le composant est déterminé. La largeur de la kième zone gravée est par exemple donnée par l'équation suivante dans le cas d'un profil quadratique de coefficient A dont l'équation de la surface s'écrit sous la forme :

$$Z = (A.y^2) \text{ modulo } h$$

où Z est la flèche locale au point d'abscisse y, et h la hauteur de saut diffractif.
par l'équation suivante :

$$L_k = [(k+1).h/A]^{\frac{1}{2}} - [k.h/A]^{\frac{1}{2}}$$

De façon générale, on peut considérer qu'il est possible par des méthodes soit analytiques, soit numériques, de déterminer la largeur des zones à tout endroit de la surface diffractive.

Dans l'équation précédente, le coefficient quadratique A s'exprime en fonction de la puissance optique P du composant diffractif gravé comme étant :

$$A = P/[2.(n-1)]$$

où n est l'indice de réfraction du matériau dans lequel est réalisé le kinoform.

On peut donc exprimer la largeur des zones en tout point de la surface en fonction de la puissance optique comme suit :

$$L_k = [(k+1).h/[ P/[2.(n-1)]]]^{1/2} - [k.h/[ P/[2.(n-1)]]]^{1/2}$$

L'exemple ci-dessus peut être généralisé de façon analytique ou sinon être calculé numériquement dans tous les cas grâce à la connaissance du profil à graver.

On peut alors, connaissant la « Largeur de Zone Perdue » ou LZP constante sur l'ensemble du profil, évaluer rapidement un rendement de diffraction dans l'ordre 1 de conception :

$$R = [(L_k - LZP)/L_k]^2$$

En substituant l'équation donnant la largeur de zones dans l'équation ci-dessus, localement, on montre ainsi que la perte de rendement (1-R) dans l'ordre 1 ne dépend finalement que de la puissance du composant, de la hauteur de saut et de la distance au centre considérée à travers la valeur du numéro de zone diffractive k.

Il est donc possible in fine, une fois la valeur de la LZP mesurée et connue, d'exprimer non seulement la perte de rendement dans l'ordre 1 de conception directement en fonction de la puissance, mais surtout d'exprimer précisément les valeurs des coefficients $R_k$, ratio entre la luminance dans les ordres parasites et l'ordre de conception (ordre 1) directement en fonction de la puissance du composant diffractif.

Par exemple, dans le cas du conduit précédent, supposons que nous avons une puissance diffractive d'environ 13 Dioptries, c'est-à-dire proche de l'optimum en ce qui concerne la correction du chromatisme transverse, et supposons que nous avons une mesure du profil comme illustré sur la figure 5 avec une largeur de zone perdue LZP de 3µ, ces données de profil permettent par simulation de calculer à l'avance les valeurs des coefficients $R_k$ pour chaque ordre de diffraction.

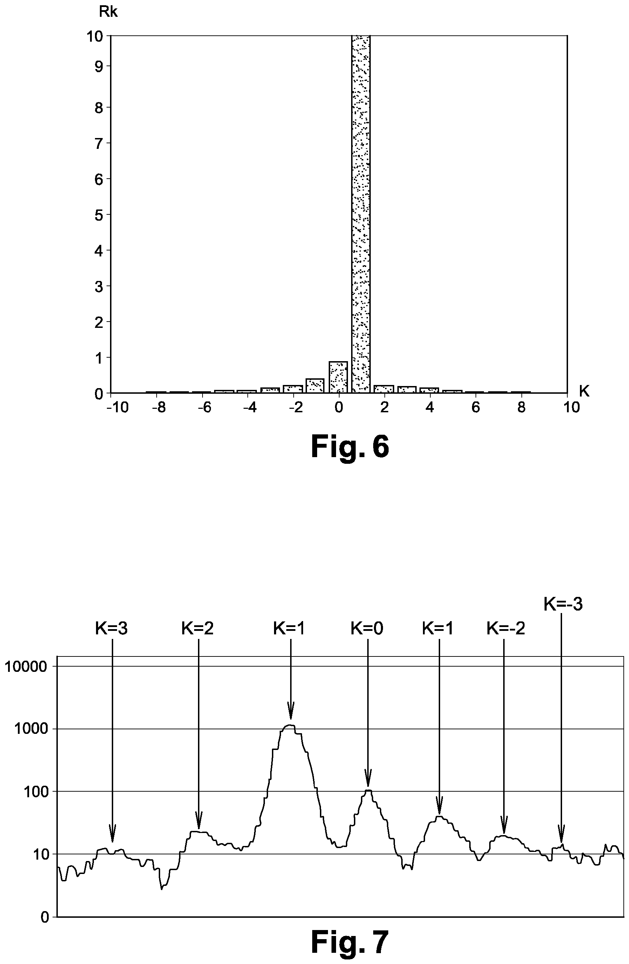

Le résultat de ces simulations est donné dans le tableau suivant et illustré sur l'histogramme de la figure 6.

| Ordre de diffraction k | $R_k$ | $1/R_k$ : ratio d'intensité |
|---|---|---|
| -8 | 2.2873e-003 | 437.2 |
| -7 | 1.2970e-003 | 771.0 |
| -6 | 1.7524e-003 | 570.6 |
| -5 | 3.2093e-003 | 311.6 |
| -4 | 5.7437e-003 | 174.1 |
| -3 | 1.0948e-002 | 91.34 |
| -2 | 2.0415e-002 | 48.98 |
| -1 | 3.6426e-002 | 27.45 |
| 0 | 8.7084e-002 | 11.48 |
| 1 | 1.0000 | 1 |
| 2 | 1.9780e-002 | 50.56 |
| 3 | 1.4383e-002 | 69.53 |
| 4 | 8.9430e-003 | 111.82 |
| 5 | 3.1287e-003 | 319.62 |
| 6 | 6.8608e-004 | 1457.6 |
| 7 | 1.7124e-003 | 583.96 |
| 8 | 2.0106e-003 | 497.36 |

La simulation ci-dessus est plus complexe que le calcul des équations précédentes qui ne donnent en fait que la perte globale d'efficacité de diffraction de l'ordre 1, alors que la simulation donne le détail de tous les coefficients $R_k$. Elle prend en compte les paramètres du profil diffractif tel que mesuré (voir figure 5), la configuration des rayons lumineux (voir figure 1), le spectre de la lumière utilisé, la fonction de sensibilité spectrale du récepteur (ici celle de l'oeil en conditions de jour : il s'agit donc ici de la fonction Y2°(λ) de la CIE (cf.publication CIE 15 :2004 ISBN 3901906339).

Afin de valider cette méthode, comme visible sur le graphe de la figure 7, il a été mesuré de façon directe la luminance des images parasites dues aux ordres de diffraction supérieurs pour un point image en bord de champ au moyen d'un photo-colorimètre imageur. Il a été constaté une bonne corrélation des mesures avec les prédictions théoriques.

Numériquement, les résultats de mesure sont compilés comme dans le tableau ci-dessous et démontrent cette bonne corrélation :

| Ordre | 3 | 2 | 1 | 0 | -1 | -2 | -3 |
|---|---|---|---|---|---|---|---|
| Luminance pic mesurée (Cd/m$^2$) | 16 | 30 | 1444 | 130 | 44 | 25 | 18 |
| Ratio 1/R$_K$ mesuré | 90,25 | 48,13 | 1 | 11,113 | 32,82 | 57,76 | 80,22 |
| Ratio 1/R$_K$ simulé | 69,52 | 50,58 | 1 | 11,48 | 27,45 | 48,98 | 91,34 |

Il est alors possible de tracer un graphe représentant pour le conduit en question, la variation des rapports 1/R$_k$ en fonction de la puissance diffractive gravée sur la face d'entrée, le défaut de gravure étant connu et considéré comme constant.

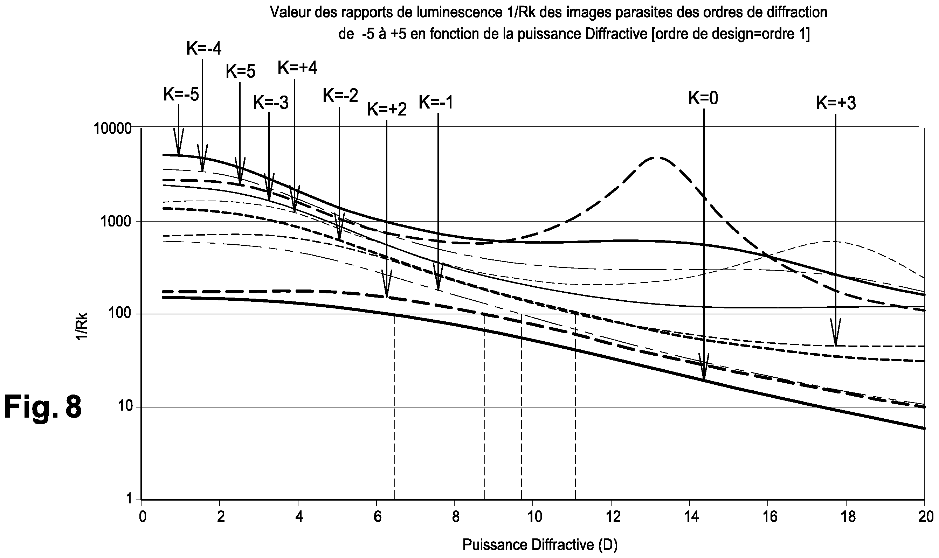

Ce graphe représenté sur la figure 8 est tracé par une simulation qui prend en compte les paramètres du profil diffractif tel que mesuré (voir figure 5) et au moins spécifiquement : la hauteur de saut, l'inclinaison des rayons lumineux par rapport à la surface d'entrée (déterminée par le tracé de rayons : voir figure 1), le spectre de la lumière utilisé, la fonction de sensibilité spectrale du récepteur (ici celle de l'oeil en conditions de jour : il s'agit donc dans notre cas de la fonction Y2°($\lambda$) de la CIE) et la transmission spectrale du système optique en amont de la surface d'entrée.

Si on observe ce graphe, on constate qu'il est possible de déterminer des zones de puissance diffractive sur la surface d'entrée où le coefficient 1/R$_k$ est supérieur à une valeur donnée Y, c'est-à-dire dans lesquels le rapport entre la luminance de l'image principale et de l'image parasite de l'ordre k considéré est supérieur à Y. On les notera D$_k$(Y,h).

Par exemple sur la figure 8, pour Y=100, et h = 1100nm, on obtient dans la plage considérée de 0 à 20.00 D de puissance diffractive :

- D$_0$(100,1100) = [0 ; 6.37]
- D$_2$(100,1100) = [0 ; 8.76]
- D$_{-1}$(100,1100) = [0 ; 9.65]
- D$_3$(100,1100) = [0 ; 11.07]

Pour tous les autres ordres, la valeur de 1/R$_k$ est toujours supérieure à Y=100.

On définit alors le domaine d'optimisation de la diffraction des ordres supérieurs pour un seuil donné et une hauteur de saut donnée comme étant l'intersection des ensembles D$_k$(Y,h).

On le note : D$_{OPTDIF}$(Y,h) = INTERSECTION $_{k=-\infty\ \text{à} +\infty}$ [D$_k$(Y,h)]
Ici, D$_{OPTDIF}$(100,1100) = [0 ; 6.37]

En pratique, on peut se limiter à k compris entre -8 et +8 pour les ordres de diffraction, voire entre -5 et +5.

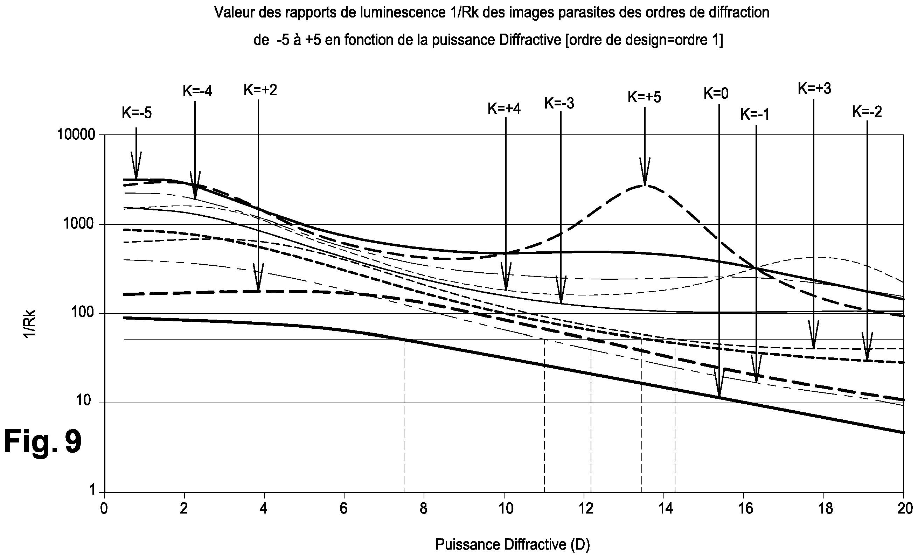

Un seuil de ratio de Y=100 est indicatif et donné à titre d'exemple ici. En pratique, il convient également de tenir compte du tolérancement du système et des incertitudes de mesures, notamment sur la hauteur du saut qui est très critique sur les valeurs des ratio obtenus. La figure 9 l'illustre particulièrement.

On observe une très grande différence dans les seuils de la figure 8 et ceux de la figure 9 alors que la différence de hauteur de saut n'est que de 50nm.

On obtient ainsi pour un seuil de 50:

- D$_0$(50,1050) = [0 ; 7.50]
- D$_2$(50,1050) = [0 ; 12.20]
- D$_{-1}$(50,1050) = [0 ; 11.11]
- D$_{-2}$(50,1050) = [0 ; 13.60]
- D$_3$(50,1050) = [0 ; 14.46]
  Ici, D$_{OPTDIF}$(50,1050) = [0 ; 7.50]

On peut remarquer que dans notre cas présent, et c'est ainsi le plus souvent, il existe un ordre de diffraction parasite qui est toujours plus lumineux que tous les autres. C'est donc lui qui délimite le domaine le plus restrictif. Ici, c'est l'ordre 0.

Il est donc important de bien estimer l'incertitude sur la mesure de hauteur de saut et en tenir compte dans les simulations. C'est le paramètre le plus sensible. Il convient en fait de réaliser deux simulations extrêmes correspondant aux valeurs extrêmes de la plage d'incertitude de la mesure de la hauteur de saut.

Le domaine d'optimisation final de la diffraction des ordres supérieurs est défini comme l'intersection des deux domaines dont la valeur du ratio correspond au seuil désiré et dont les valeurs de hauteurs de saut correspondent aux extrêmes de l'incertitude de mesure de la hauteur de saut.

On note alors : $D_{OPTDIF}(Seuil) = D_{OPTDIF}(Seuil,hauteur\_min)$ INTERSECTION $D_{OPTDIF}(Seuil,hauteur\_max)$

Dans le cas d'un système oculaire comme précisé plus haut, l'expérience montre qu'un seuil minimum de 30 est acceptable par le porteur et qu'à partir d'un seuil égal à 50, la gêne est quasi inextistante.

Afin de réaliser l'optimisation complète du composant, on détermine un composant diffractif dont la puissance diffractive mise sur la face d'entrée est située dans un domaine défini comme étant :

$$D(Seuil,X) = D_{OPTDIF}(Seuil) \text{ INTERSECTION } D_{XT}(X)$$

où X correspond au seuil de chromatisme transverse admissible.
préférentiellement, pour l'application précédente, Seuil = 50 et X = 4 arcmin.

On peut tolérer jusqu'à Seuil = 30 et X = 6 arcmin.
et où les domaines sont calculés comme explicité ci-dessus tant pour le chromatisme transverse que pour l'efficacité de diffraction.

Les valeurs précisées dans cette description sont propres à une combinaison optique telle que précisée au début de la description, mais la méthode peut être appliquée pour d'autres conceptions, par exemple un verre ophtalmique.

Par ailleurs, le terme oeil doit être entendu comme recouvrant tout récepteur adapté à recevoir une image virtuelle.

**Revendications**

1. Procédé de détermination de la puissance d'un conduit optique destiné à transmettre des signaux de lumière d'une de ses extrémités dite surface d'entrée (1A) à son autre extrémité dite surface de sortie (1B) vers l'oeil (3) d'un utilisateur pour la vision d'une image virtuelle, conduit comportant un composant diffractif conformé directement sur la surface d'entrée (1A), ce composant diffractif étant un élément répondant à l'équation d'un composant asphérique de révolution, de type « kinoform », ledit conduit étant fabriqué au moyen d'un outillage de fabrication donné présentant un défaut de gravure, procédé **caractérisé en ce que** la puissance de ce composant diffractif est située dans un domaine D(Seuil,X) défini par :

$$D(Seuil,X) = DOPTDIF(Seuil) \text{ INTERSECTION } DXT(X),$$

où le domaine DTXT(X) correspond à la plage de valeurs de la puissance diffractive (ΔP) du dit composant pour laquelle la valeur du chromatisme transverse global est inférieur à un seuil de chromatisme transverse admissible X égal ou inférieur à 6 arcmin, le chromatisme transverse étant exprimé sous forme d'angle, DOPTDIF(Seuil) est un domaine de puissance déterminé en fonction d'une efficacité de diffraction dite Seuil correspondante à une valeur admissible de $1/R_k$ supérieure ou égale à 30, pour ledit outillage de fabrication donné, Rk étant le ratio entre la valeur pic de l'intensité de l'image ponctuelle de l'ordre de diffraction considéré k, et la valeur pic de l'intensité de l'image ponctuelle de l'ordre de diffraction de conception.

2. Procédé selon la revendication 1, **caractérisé en ce que** le domaine $D_{OPTDIF}(Seuil)$ est défini par :

$$D_{OPTDIF}(Seuil) = D_{OPTDIF}(Seuil,hauteur\_min) \text{ INTERSECTION } D_{OPTDIF}(Seuil,hauteur\_max),$$

où hauteur_min et hauteur_max sont les valeurs maximale et minimale de la hauteur de saut h du dit composant diffractif

3. Procédé selon la revendication 2, **caractérisé en ce que**

$$D_{OPTDIF} (Seuil,h) = INTERSECTION _{k=-\infty \text{ à } +\infty} [D_k(Seuil,h)]$$

où
$D_k(Seuil,h)$ est la plage de puissance pour laquelle la valeur de $1/R_k$ est supérieure à la valeur Seuil.

4. Procédé selon la revendication précédente, **caractérisé en ce que** $D_k(Seuil,h)$ est défini au moyen d'une représentation de la variation des rapports $1/R_k$ en fonction de la puissance diffractive du composant diffractif, le défaut de gravure étant connu et considéré comme constant, grâce à une simulation prenant en compte des paramètres du profil diffractif et au moins spécifiquement de la hauteur de saut, l'inclinaison des rayons lumineux par rapport à la surface portant ledit composant diffractif, le spectre de la lumière utilisé, la fonction de sensibilité spectrale de l'oeil, la transmission spectrale du système optique en amont de ladite surface et la position du point image.

5. Procédé selon la revendication précédente, caractérisé en ce ladite position du point image est choisie de façon à minimiser les rapports $1/R_k$

6. Procédé selon la revendication précédente,**caractérisé en ce que** ladite position du point image est située en bord de champ.

7. Procédé selon l'une des revendications précédentes, **caractérisé en ce que** la valeur de k est comprise entre -8 et +8.

**Patentansprüche**

1. Verfahren zur Bestimmung der Leistung eines optischen Kanals, der dazu bestimmt ist, Lichtsignale von einem seiner Enden, Eingangsfläche (1A) genannt, an seinem anderen Ende, Ausgangsfläche (1B) genannt, zum Auge (3) eines Benutzers zur Ansicht eines virtuellen Bilds zu übertragen, wobei der Kanal ein Beugungsbauelement aufweist, das direkt auf der Eingangsfläche (1A) ausgebildet ist, wobei dieses Beugungsbauelement ein Element ist, das der Gleichung eines asphärischen drehsymmetrischen Bauelements von der Art « Kinoform » entspricht, wobei der Kanal mittels eines gegebenen Herstellungswerkzeugs hergestellt wird, das einen Ätzfehler aufweist, wobei das Verfahren **dadurch gekennzeichnet ist, dass** die Leistung dieses Beugungsbauelements sich in einer Bereich D(Schwelle,X) befindet, der definiert wird durch:

```
D(Schwelle,X) = DOPTDIF(Schwelle) SCHNITTSTELLE
DXT(X),
```

wobei der Bereich DTXT(X) dem Wertebereich der Beugungsleistung (ΔP) des Bauelements entspricht, für die der Wert des globalen transversalen Chromatismus niedriger als eine zulässige transversale Chromatismusschwelle X gleich oder niedriger als 6 arcmin ist, wobei der transversale Chromatismus in Form eines Winkels ausgedrückt wird,
DOPTDIF(Schwelle) ein Leistungsbereich ist, der abhängig von einer Schwelle genannten Beugungswirksamkeit bestimmt wird, die einem zulässigen Wert von $1/R_k$ höher als oder gleich 30 entspricht, für das gegebene Herstellungswerkzeug, wobei Rk der Quotient zwischen dem Spitzenwert der Intensität des punktförmigen Bilds der betrachteten Beugungsordnung k und dem Spitzenwert der Intensität des punktförmigen Bilds der Konstruktion-Beugungsordnung ist.

2. Verfahren nach Anspruch 1, **dadurch gekennzeichnet, dass** der Bereich $D_{OPTDIF}$(Schwelle) definiert wird durch:

```
DOPTDIF(Schwelle)   =   DOPTDIF(Schwelle,Höhe_min)
SCHNITTSTELLE DOPTDIF(Schwelle,Höhe_max),
```

wobei Höhe_min und Höhe_max der maximale und der minimale Wert der Sprunghöhe h des Beugungsbauelements sind.

3. Verfahren nach Anspruch 2, **dadurch gekennzeichnet, dass**
   $D_{OPTDIF}$(Schwelle, h) = SCHNITTSTELLE $_{k=-\infty \text{ bis } +\infty}$ [$D_k$(Schwelle,h)] ist, wobei $D_k$(Schwelle,h) der Leistungsbereich ist, für den der Wert von $1/R_k$ höher ist als der Schwellwert.

4. Verfahren nach dem vorhergehenden Anspruch,
   **dadurch gekennzeichnet, dass** $D_k$(Schwelle,h) mittels einer Darstellung der Variation der Verhältnisse $1/R_k$ abhängig von der Beugungsleistung des Beugungsbauelements definiert wird, wobei der Ätzfehler bekannt ist und als konstant angenommen wird, aufgrund einer Simulation, die Parameter des Beugungsprofils und mindestens spezifisch der Sprunghöhe, der Neigung der Lichtstrahlen bezüglich der das Beugungsbauelement tragenden Fläche, des verwendeten Lichtspektrums, der spektralen Empfindlichkeitsfunktion des Auges, der spektralen Übertragung des optischen Systems stromaufwärts vor der Fläche und der Position des Bildpunkts berücksichtigt.

5. Verfahren nach dem vorhergehenden Anspruch, **dadurch gekennzeichnet, dass** die Position des Bildpunkts so gewählt wird, dass die Verhältnisse $1/R_k$ minimiert werden.

6. Verfahren nach dem vorhergehenden Anspruch, **dadurch gekennzeichnet, dass** die Position des Bildpunkts sich am Feldrand befindet.

7. Verfahren nach einem der vorhergehenden Ansprüche, **dadurch gekennzeichnet, dass** der Wert von k zwischen -8 und +8 liegt.

## Claims

1. Method for determining the power of an optical pipe intended to transmit light signals from one of its ends, called its entrance surface (1A), to another end, called its exit surface (1B), towards the eye (3) of a user for vision of a virtual image, said pipe comprising a diffractive component formed directly on the entrance surface (1A), this diffractive component being an element respecting the equation of an aspherical axisymmetric component of "kinoform" type, said pipe being manufactured by means of a given piece of manufacturing apparatus having an engraving defect, said method being **characterized in that** the power of this diffractive component is located in a domain D(Threshold,X) defined by:

   ```
   D(Threshold,X) = DOPTDIF(Threshold) INTERSECTION DXT (X)
   ```

   where the domain DTXT(X) corresponds to that range of values of the diffractive power ($\Delta P$) of said component for which the value of the overall transverse chromatic aberration is lower than an acceptable transverse chromatic aberration threshold X equal to or lower than 6 arcmin, the transverse chromatic aberration being expressed in angular form,
   DOPTDIF(Threshold) is a power domain that is determined depending on a diffraction efficiency, called the Threshold diffraction efficiency, corresponding to an acceptable value of 1/Rk higher than or equal to 30, for said given piece of manufacturing apparatus, Rk being the ratio between the peak value of the intensity of the point image of the diffraction order k in question, and the peak value of the intensity of the point image of the design diffraction order.

2. Method according to Claim 1, **characterized in that** the domain $D_{OPTDIF}$(Threshold) is defined by:

   ```
   DOPTDIF (Threshold)   =   DOPTDIF (Threshold,height_min)
   INTERSECTION DOPTDIF (Threshold,height_max)
   ```

   where height_min and height_max are the maximum and minimum values of the step height h of said diffractive component.

3. Method according to Claim 2, **characterized in that**

$$D_{OPTDIF}(\text{Threshold},h) \quad = \quad \text{INTERSECTION} \quad _{k=-\infty} \quad _{to} \quad _{k} \quad _{+\infty}$$
$$[Dk(\text{Threshold, h})]$$

where
Dk(Threshold,h) is the power range for which the value of $1/R_k$ is higher than the Threshold value.

4. Method according to the preceding claim, **characterized in that** Dk(Threshold,h) is defined by means of a representation of the variation in the ratios $1/R_k$ as a function of the diffractive power of the diffractive component, the engraving defect being known and considered to be constant, by virtue of a simulation taking into account parameters of the diffractive profile and at least specifically the step height, the inclination of the light rays with respect to the surface bearing said diffractive component, the light spectrum used, the spectral sensitivity function of the eye, the spectral transmission of the optical system upstream of said surface and the position of the image point.

5. Method according to the preceding claim, **characterized in that** said position of the image point is chosen so as to minimize the ratios $1/R_k$.

6. Method according to the preceding claim, **characterized in that** said position of the image point is located on a field edge.

7. Method according to one of the preceding claims, **characterized in that** the value of k is comprised between -8 and +8.

**Fig. 1**

**Fig. 2**    1A

**Fig. 3**

**Fig. 4**

**Fig. 5**

Fig. 6

Fig. 7

Valeur des rapports de luminescence 1/Rk des images parasites des ordres de diffraction de -5 à +5 en fonction de la puissance Diffractive [ordre de design=ordre 1]

Fig. 8

K=-4
K=-5
K=5
K=+4
K=-3
K=-2
K=+2
K=-1
K=0
K=+3

1/Rk

10000
1000
100
10
1

0    2    4    6    8    10    12    14    16    18    20

Puissance Diffractive (D)

EP 2 030 054 B1

Valeur des rapports de luminescence 1/Rk des images parasites des ordres de diffraction de -5 à +5 en fonction de la puissance Diffractive [ordre de design=ordre 1]

**Fig. 9**

EP 2 030 054 B1

**EP 2 030 054 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2868551
- US 20020196428 A